# EUROPÄISCHE PATENTSCHRIFT

(11) **EP 2 164 790 B1**
(45) Veröffentlichungstag und Bekanntmachung des Hinweises auf die Patenterteilung: **30.09.2015**
(21) Anmeldenummer: 08749899.4
(22) Anmeldetag: 30.04.2008
(51) Int. Cl.: B66D 5/08, F16D 66/02

(54) **EINRICHTUNG UND VERFAHREN ZUM ÜBERWACHEN EINER BREMSEINRICHTUNG**
DEVICE AND METHOD FOR CONTROLLING A BRAKE DEVICE
DISPOSITIF ET PROCEDE POUR CONTROLER UN DISPOSITIF DE FREIN

(30) Priorität: 18.06.2007 EP 07110428
(43) Veröffentlichungstag der Anmeldung: 24.03.2010
(73) Patentinhaber: Inventio AG, 6052 Hergiswil (CH)
(72) Erfinder: ERNY, Karl, CH-6343 Holzhäusern (CH); LINDEGGER, Urs, CH-6030 Ebikon (CH); ECKENSTEIN, Rudolf, CH-6340 Baar (CH)
(86) Internationale Anmeldenummer: PCT/EP2008/055303
(87) Internationale Veröffentlichungsnummer: WO 2008/155164

(56) Entgegenhaltungen:
- EP-A- 0 502 282
- DE-C1- 19 633 836
- US-A1- 2001 042 662

## Beschreibung

Die Erfindung betrifft eine Einrichtung und ein Verfahren zum Überwachen einer Bremseinrichtung für einen Aufzugsantrieb, bestehend aus Bremshebel mit einer Federkraft beaufschlagenden Druckfedern, wobei Bremsbeläge an einer Bremstrommel eine Bremskraft erzeugen und mindestens ein Bremsmagnet entgegen der Federkraft die Bremshebel lüftet gemäss der Definition der unabhängigen Patentansprüche.

Aus der Patentschrift EP 1 156 008 B1 ist eine Bremseinrichtung für eine Antriebsmaschine bekannt geworden. Die Bremseinrichtung besteht aus einem ersten Bremshebel und einem zweiten Bremshebel, an denen je eine auf eine Bremstrommel einwirkende Bremsbacke angeordnet ist. Die Bremshebel sind unten gelenkig an einem Lagerbock gelagert und oben an einer Stange geführt. Zur Betätigung der Bremsbacken ist je Bremshebel eine Druckfeder vorgesehen. Zum Lüften der Bremsbacken ist je Bremshebel ein Magnet vorgesehen, der entgegen der Druckfeder arbeitet. Die Magnete sind an einem Rahmen angeordnet, der mit dem Lagerbock verbunden ist. An der Innenseite eines jeden Magnetträgers ist ein Mikroschalter angeordnet. Ein Stössel des Mikroschalters wird mittels einer an einer Ankerscheibe angeordneten Nocke betätigt. Der Schaltzustand des Mikroschalters zeigt der Steuerung des Aufzuges an, ob die Bremse mittels der Magnete gelöst bzw. gelüftet ist oder ob die Bremse nicht gelöst bzw. nicht gelüftet ist.

Aus der Schrift EP 0 502 282 A1 ist eine Bremseinrichtung für eine Antriebsmaschine bekannt geworden. Im Bremsfall wirken mit einer Federkraft beaufschlagte Bremshebel via Bremsbacken auf eine Bremstrommel ein und setzen diese fest. Jeder Bremshebel ist an einem Drehpunkt gelagert. Zum Lösen der Bremse ist ein Bremsmagnet vorgesehen, der ein Bremsmagnetgehäuse und je Bremshebel einen Stössel aufweist, wobei die Bewegung des Stössels mittels eines Grenzwerttasters überwacht wird.

Die Erfindung, wie sie in den unabhängigen Ansprüchen gekennzeichnet ist, löst die Aufgabe, mit einer Einrichtung und einem Verfahren eine sicher arbeitende Bremseinrichtung zu schaffen, die für die Benutzer des Aufzuges gefährliche Zustände verhindert.

Vorteilhafte Weiterbildungen der Erfindung sind in den abhängigen Patentansprüchen angegeben.

Die durch die Erfindung erreichten Vorteile sind im wesentlichen darin zu sehen, dass nicht nur wie bisher die Endlage der Bremshebel im durch den Bremsmagnet bewirkten, gelösten Zustand der Bremseinrichtung sondern auch die Lage des beweglichen Bremsmagnetteils wie beispielsweise des Bremsmagnetstössels bzw. des Ankers des Bremsmagnets überwacht wird. Damit kann vermieden werden, dass durch allmählichen Abrieb der Bremsbeläge der bewegliche Bremsmagnetteil wie beispielsweise der Bremsmagnetstössel bzw. der Bremsmagnetanker am festen Bremsmagnetteil wie beispielsweise am Bremsmagnetgehäuse anstehen kann und damit das Bremsvermögen der Bremseinrichtung vermindern oder im Extremfall aufheben kann. Der Aufzugsantrieb kann so direkt abgeschaltet werden, bevor die Bremse versagt bzw. bevor ein für die Benutzer des Aufzuges gefährlicher Zustand eintreten kann.

Weiter vorteilhaft ist der einfache Aufbau der erfindungsgemässen Einrichtung, die beispielsweise mittels Sensor (Näherungsschalter, Lineargeber, etc.) realisierbar ist.

Mit der Erfindung lässt sich ein Aufzugsantrieb vorteilhaft bauen und auch ein bestehender Aufzugsantrieb vorteilhaft nachrüsten. Der Sensor kann im festen Bremsmagnetteil wie beispielsweise im Bremsmagnetgehäuse oder ausserhalb angeordnet werden, wobei jeweils die Relativbewegung des beweglichen Bremsteils wie beispielsweise des Bremsmagnetstössels bzw. des Ankers gegenüber dem festen Bremsmagnetteil wie beispielsweise dem Bremsmagnetgehäuse erfasst wird.

Mit dem einfachen Aufbau der Lageüberwachung können bestehende Aufzugsanlagen mit der erfindungsgemässen Lageüberwachung ohne grossen Aufwand, beispielsweise durch Anbau des Sensors am Bremsmagnetstössel, nachgerüstet werden.

Bei dem erfindungsgemässen Aufzugsantrieb mit einer Bremseinrichtung, bestehend aus Bremshebel mit einer Federkraft beaufschlagenden Druckfedern, erzeugen Bremsbeläge an einer Bremstrommel eine Bremskraft und mindestens ein Bremsmagnet lüftet entgegen der Federkraft die Bremshebel, wobei mindestens ein Sensor vorgesehen ist, der eine Bewegung bzw. eine Distanz zwischen einem Anker des Bremsmagnets und einem Bremsmagnetgehäuse überwacht. Mit dem Sensorsignal kann nicht nur ein Signal für die Endlage des Bremsmagnetstössels bzw. Bremsmagnetankers erzeugt werden, sondern auch weitere Signale wie beispielsweise ein Signal für den Bremshub, ein Signal für die Bremsbelagabnutzung oder ein Signal für die Bremstrommelerwärmung. Damit kann die Sicherheit für die Aufzugsbenutzer zusätzlich erhöht werden, weil zu gefährlichen Situation führende Betriebszustände der Bremseinrichtung frühzeitig erkennbar sind.

Anhand der beiliegenden Figuren wird die vorliegende Erfindung näher erläutert.

Es zeigen:
Fig. 1
   eine schematische Darstellung eines Aufzugsantriebs mit einer Bremseinrichtung mit zwei Druckfedern und einem Bremsmagnet,
Fig. 3
   eine Ausführungsvariante eines Aufzugsantriebs mit einer Bremseinrichtung mit einer Druckfeder und einem Bremsmagnet,
Fig. 4
   Einzelheiten einer Verbindung eines Bremsmagnetstössels mit einem Bremshebel,
Fig. 5
   schematische Darstellung eines Sensors zur Erfassung einer Bewegung bzw. einer Distanz,
Fig. 6, Fig. 6a
   Einzelheiten der Anordnung des Sensors am Bremsmagnetstössel,
Fig. 6b, Fig. 6c,
   Einzelheiten einer rückfedernden Fahne,
Fig. 7, Fig. 7a
   ein Ausgangssignal des Sensors in Abhängigkeit der erfassten Distanz und
Fig. 8
   ein Blockschaltbild eines Monitors zur Auswertung des Sensorsignals und zur Anzeige des Zustandes der Bremseinrichtung.

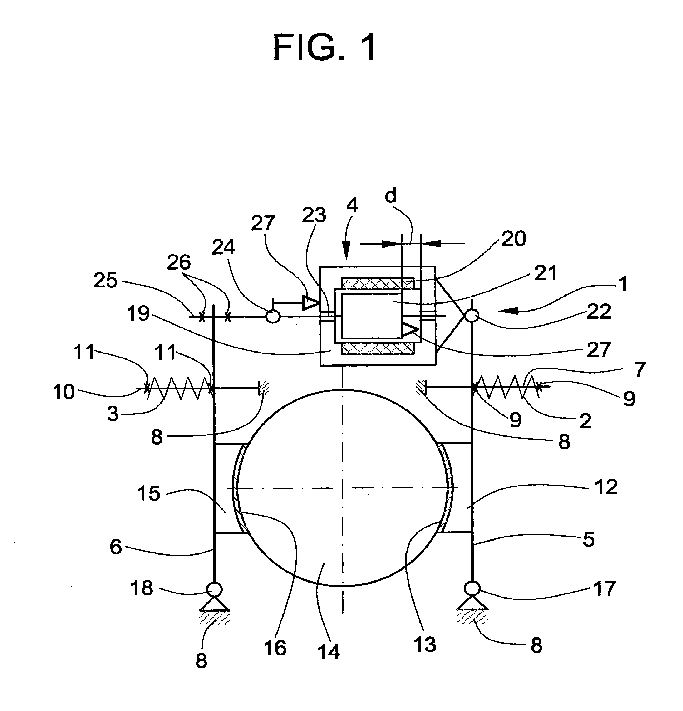

Fig. 1 zeigt eine schematische Darstellung einer Bremseinrichtung 1 mit einer ersten Druckfeder 2, einer zweiten Druckfeder 3, einem ersten Bremshebel 5, einem zweiten Bremshebel 6 und einem Bremsmagnet 4. Die erste Druckfeder 2 beaufschlagt den ersten Bremshebel 5 mit einer Federkraft. Die zweite Druckfeder 3 beaufschlagt den zweiten Bremshebel 6 mit einer Federkraft. Die erste Druckfeder 2 wird mittels einer ersten Stange 7 geführt, die einenends mit einem Maschinengehäuse 8 verbunden ist und anderenends ein erstes Justierelement 9 aufweist, beipielsweise auf Gewinde der Stange 7 aufgesetzte Muttern mit Gegenmuttern, wobei mit dem Justierelement 9 die Bremskraft und die Öffnung des ersten Bremshebels 5 einstellbar ist. Die zweite Druckfeder 3 wird mittels einer zweiten Stange 10 geführt, die einenends mit dem Maschinengehäuse 8 verbunden ist und anderenends ein zweites Justierelement 11 aufweist, beispielsweise auf Gewinde der Stange 10 aufgesetzte Muttern mit Gegenmuttern, wobei mit dem Justierelement 11 die Bremskraft und die Öffnung des zweiten Bremshebels 6 einstellbar ist. Am ersten Bremshebel 5 ist eine erste Bremsbacke 12 angeordnet, die einen ersten Bremsbelag 13 trägt, wobei der erste Bremsbelag 13 an einer Bremstrommel 14 eine

Bremskraft erzeugt. Am zweiten Bremshebel 6 ist eine zweite Bremsbacke 15 angeordnet, die einen zweiten Bremsbelag 16 trägt, wobei der zweite Bremsbelag 16 an der Bremstrommel 14 eine Bremskraft erzeugt. Der erste Bremshebel 5 ist drehbar an einer ersten, am Maschinengehäuse 8 abgestützten Hebelachse 17 gelagert. Der zweite Bremshebel 6 ist drehbar an einer zweiten, am Maschinengehäuse 8 abgestützten Hebelachse 18 gelagert. Die Bremstrommel 14 ist üblicherweise mit einer nicht dargestellten Motorachse verbunden.

Der Bremsmagnet 4 besteht aus einer in einem festen Bremsmagnetteil wie beispielsweise ein Bremsmagnetgehäuse 19 angeordneten Magnetspule 20, die strombeaufschlagt mit ihrem Magnetfeld auf einen beweglichen Bremsmagnetteil wie beispielsweise ein Anker 21 einwirkt, wobei das Bremsmagnetgehäuse 19 mit der Magnetspule 20 und der Anker 21 sich gegenseitig abstossen und der Federkraft der Druckfedern 2,3 entgegenwirken. Der bewegliche Bremsmagnetteil führt gegenüber dem festen Bremsmagnetteil eine Relativbewegung aus. Das Bremsmagnetgehäuse 19 ist an einem ersten Gelenk 22 mit dem ersten Bremshebel 5 verbunden. Der Anker 21 ist mit einem Bremsmagnetstössel 23 verbunden, der wiederum an einem zweiten Gelenk 24 mit einer dritten Stange 25 verbunden ist. Die dritte Stange 25 ist mittels dritten Justierelementen 26 mit dem zweiten Bremshebel 6 verbunden.

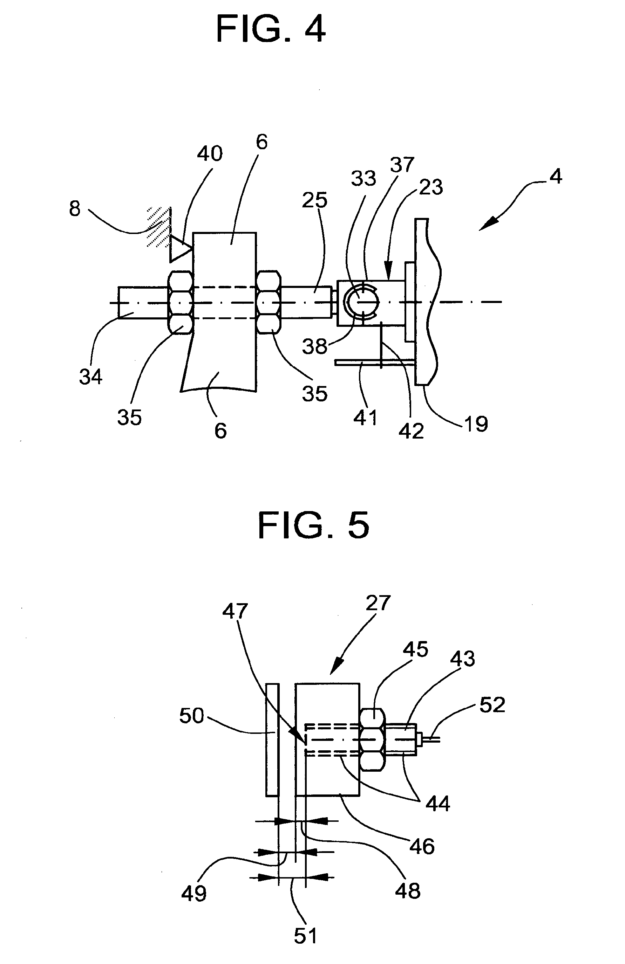

Je mehr sich die Bremsbeläge 13,16 durch Abrieb abnützen, umso kleiner wird die Distanz d des Ankers 21 zum Bremsmagnetgehäuse 19. Steht der Anker 21 am Bremsmagnetgehäuse an, wird das Bremsvermögen der Bremsbeläge 13,16 vollständig aufgehoben. Damit dieser für Aufzugsbenutzer gefährliche Betriebszustand nicht eintreten kann, ist mindestens ein Sensor 27 vorgesehen, der die Bewegung bzw. die Distanz d detektiert. Als Sensor 27 kann beispielsweise ein Näherungsschalter, beispielsweise mit Analogausgang oder ein Lineargeber vorgesehen sein. Der Sensor 27 kann am Anker 21 angeordnet sein und die Distanz d zum Bremsmagnetgehäuse 19 erfassen. Der Sensor 27 kann auch am Bremsmagnetgehäuse 19 angeordnet sein und die Distanz d zum Anker 21 erfassen. Der Sensor 27 kann auch am Bremsmagnetstössel 23 angeordnet sein und die Relativbewegung des Bremsmagnetstössels 23 gegenüber dem Bremsmagnetgehäuse 19 ausführen, wobei der Sensor 27 die relative Lage des Bremsmagnetstössels 23 gegenüber dem Bremsmagnetgehäuse 19 erfasst. Einzelheiten sind in den Figuren 4 bis 6 näher erläutert. Die Sensoranordnung gemäss Figuren 4 bis 6 wird bei einer Nachrüstung in bestehenden Aufzugsanlagen bevorzugt. Bei Neuanlagen kann eine Sensoranordnung gemäss Figuren 4 bis 6 oder ein Bremsmagnet 4 mit eingebautem Sensor 27 verwendet werden.

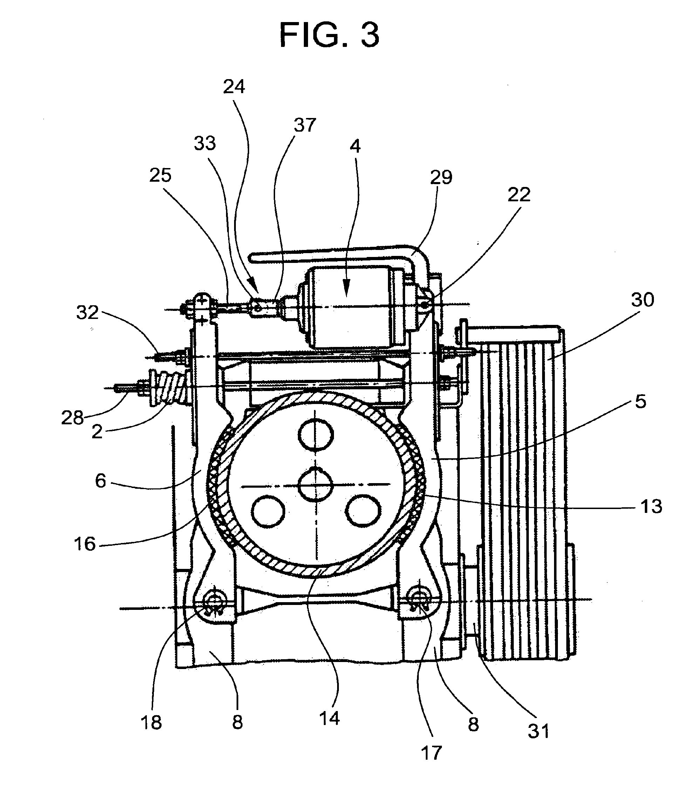

Fig. 3 zeigt eine Ausführungsvariante einer Bremseinrichtung 1 mit nur einer Druckfeder 3 und einem Bremsmagnet 4. Die Druckfeder 3 stützt sich ab am zweiten Bremshebel 6 und an einer vierten Stange 28, die anderenends mit dem ersten Bremshebel 5 verbunden ist. Die Druckfeder 3 beaufschlagt so die beiden Bremsbeläge 13,16 mit einer Federkraft. Der Bremsmagnet 4 arbeitet wie in Fig. 1 erläutert, wobei mindestens ein Sensor 27 im Bremsmagnet 4 eingebaut sein kann oder wie in den Fig. 4 bis 6 gezeigt am zweiten Gelenk 24 nachträglich angebaut werden kann. Der Bremsmagnet 4 arbeitet entgegen der Federkraft der Druckfeder 3 und löst die Bremsbeläge 13,16 von der Bremstrommel 14. Die Kraft des Bremsmagnets 4 kann auch manuell mittels eines Bremslüfthebels 29 erzeugt werden. Eine fünfte Stange 32 begrenzt die Auslenkung der Bremshebel 5,6 durch den Magnet 4 bzw. durch den Bremslüfthebel 29. Mit 30 ist eine an einer Getriebeausgangswelle 31 angeordnete Treibscheibe bezeichnet, über die Trag- und Treibmittel der Aufzugskabine bzw. des Gegengewichtes geführt sind. Eine Bruchlinie unterhalb der Treibscheibenachse deutet an, dass die untere Hälfte der Treibscheibe 30 und des Antriebs nicht dargestellt ist.

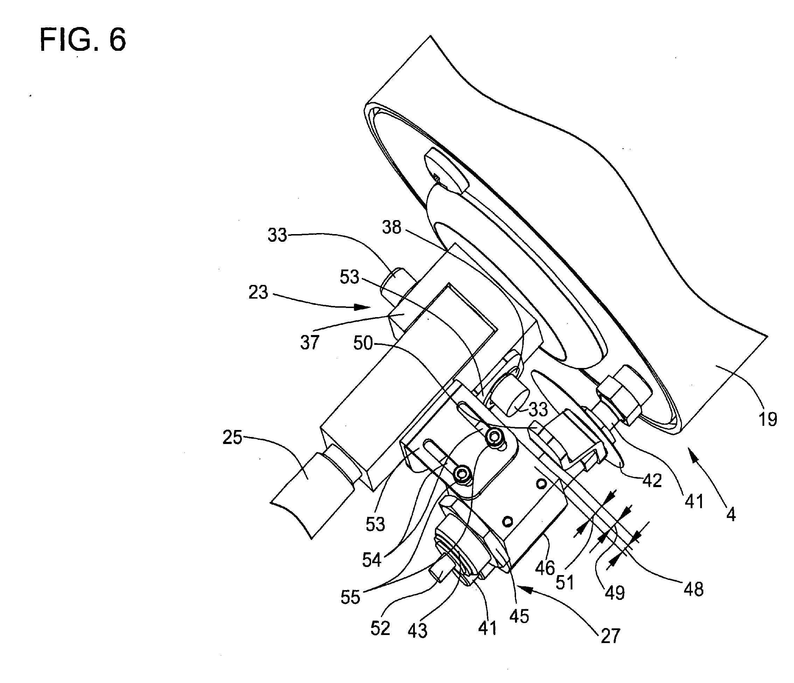

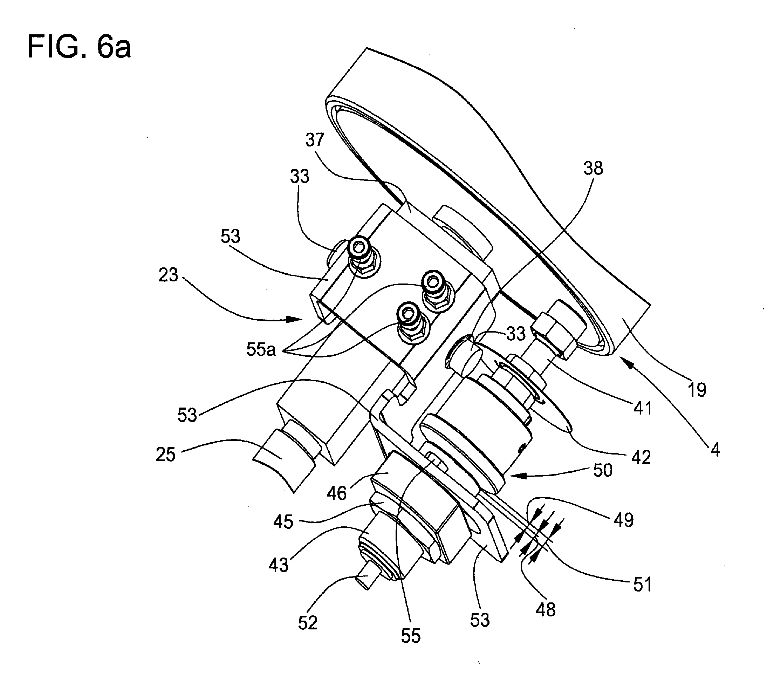

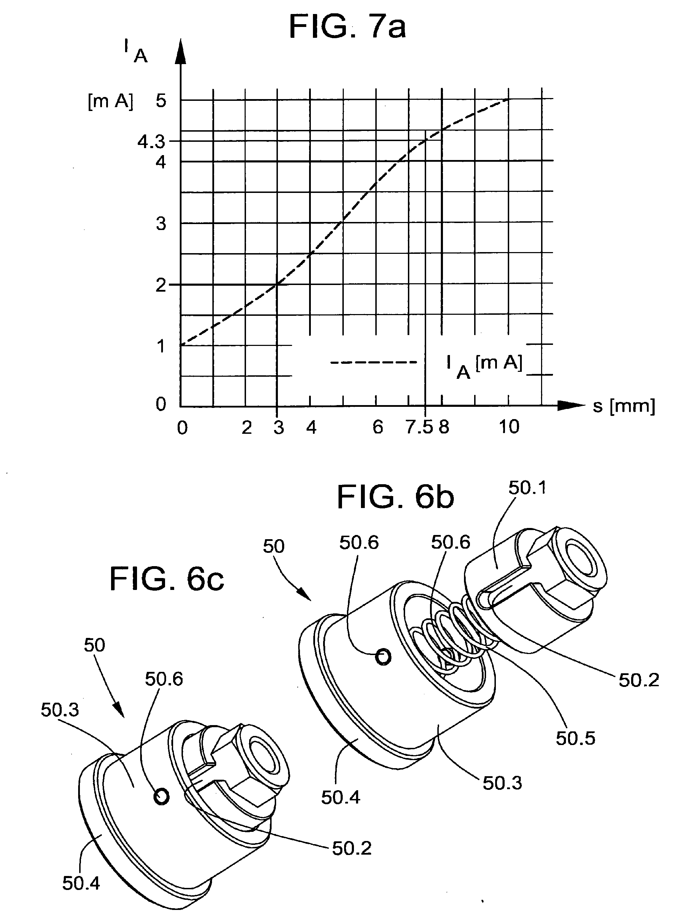

Fig. 4 zeigt Einzelheiten der Verbindung des Bremsmagnetstössels 23 mit dem zweiten Bremshebel 6. Die dritte Stange 25 ist mittels eines den Bremsmagnetstössel 23 durchdringenden Bolzens 33 an den Bremsmagnetstössel 23 angelenkt, wobei Federringe 38 den Bolzen beidseitig sichern. Das Ende 37 des Bremsmagnestössels 23 ist gabelförmig ausgebildet. Am freien Ende der dritten Stange 25 ist ein Gewinde 34 vorgesehen, das zusammen mit Muttern 35 als drittes Justierelement 26 dient. Zur Überwachung, ob die Bremshebel 5,6 und somit die Bremsbeläge 13,16 von der Bremstrommel 14 gelöst worden sind, kann mindestens ein Bremshebelschalter 40 vorgesehen sein. Der Bremshebelschalter 40 kann wie in Fig. 4 gezeigt die Lage des Bremshebels 6 überwachen oder so angeordnet sein, dass er die Lage des Bolzens 33 gegenüber dem Bremsmagnetgehäuse 19 überwacht. Am Bremsmagnetgehäuse 19 ist üblicherweise eine sechste Stange 41 angeordnet, an der eine erste Fahne 42 vorgesehen ist. Mit der relativen Lage des Bolzens 33 gegenüber der ersten Fahne 42 kann festgestellt werden, wie weit der Anker 21 vom Bremsmagnetgehäuse 19 entfernt ist. Die sechste Stange 41 zusammen mit der ersten Fahne 42 wird auch mechanischer Indikator genannt. Je mehr sich die Bremsbeläge 13,16 durch Abrieb abnützen, umso weniger ist der Bolzen 33 von der ersten Fahne 42 entfernt. Wie in Fig. 6 gezeigt, wird im vorliegenden Ausführungsbeispiel die sechste Stange 41 und der Bolzen 33 als mechanischer Referenzpunkt für den Sensor 27 verwendet.

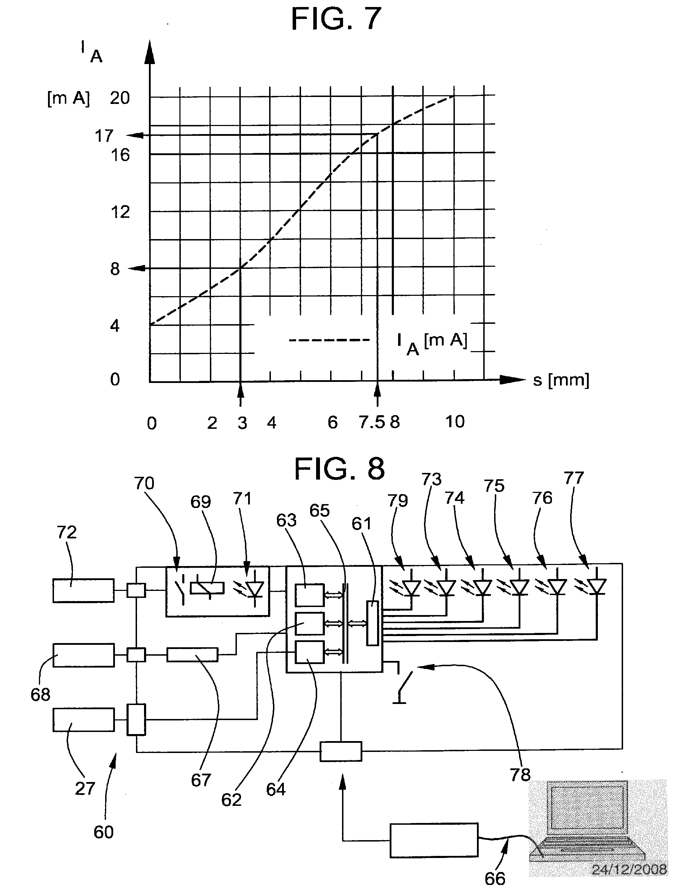

Fig. 5 zeigt in schematischer Darstellung den Sensors 27 zur Erfassung der Bewegung bzw. der Distanz d des Ankers 21 zum Bremsmagnetgehäuse 19, bzw. der relativen Bewegung des Bremsmagnetstössels 33 gegenüber dem Bremsmagnetgehäuse 19. Im vorliegenden Ausführungsbeispiel ist als Sensor 27 ein induktiver Näherungsschalter mit Analogausgang vorgesehen, der auf ferromagnetische Gegenstände reagiert. Der Sensor 27 weist ein Sensorgehäuse 43 mit einem zweiten Gewinde 44 auf, auf das eine Gegenmutter 45 schraubbar ist. Das Sensorgehäuse 43 ist in ein magnetisch neutrales Distanzstück 46, beispielsweise aus Kunststoff eingeschraubt und mit der Gegenmutter 45 verdrehgesichert, wobei das Distanzstück 46 an der Stirnseite 47 des Sensors 27 eine definierte Wandstärke 48, beispielsweise 1 mm aufweist. Mit 49 ist ein Luftspalt bezeichnet zwischen einer zweiten Fahne 50 und dem Distanzstück 46. Wandstärke 48 plus Luftspalt 49 ergibt den Sensorabstand 51 von der zweiten Fahne 50. In der Fig. 7 und in der Fig. 7a ist der Sensorabstand 51 mit s bezeichnet. Mit dem Distanzstück 46 werden Einstellarbeiten vor Ort vermieden. Wie in der Fig. 6 und in der Fig. 6a gezeigt dient das Distanzstück 46 auch als Träger für den Sensor 27. Der Sensor 27 kann fabrikseitig in das Distanzstück 46 vollständig eingeschraubt werden und vor Ort montiert werden ohne Einstellungen in achsialer Richtung. Die Speisung des Sensors 27 und der Signalausgang des Sensors 27 erfolgt über ein Anschlusskabel 52.

Fig. 6, Fig. 6a zeigen Einzelheiten der Anordnung des Sensors 27 am Bremsmagnetstössel 23. Ein Bügel 53 wird einenends am bestehenden Bolzen 33 festgemacht und anderenends wird das das Sensorgehäuse 43 tragende Distanzstück 46 angeordnet. In Fig. 6 ist das Distanzstück 46 ist mit Hilfe von Langschlitzen 54 und Schrauben 55 quer zur Bewegungsrichtung des Bremsmagnetstössels 23 auf die bestehende sechste Stange 41 ausrichtbar. Die zweite Fahne 50 ist an der sechsten Stange 41 festgemacht. Eine Einstellung in der Bewegungsrichtung des Bremsmagnetstössels 23 ist nicht notwendig.

In Fig. 6a ist der Bügel 53 mittels Schrauben 55a am gabelförmigen Ende 37 des Bremsmagnestössels 23 festgemacht. Wie in Fig. 6a gezeigt ist die zweite Fahne 50 koaxial zur Achse der sechsten Stange 41 und des Sensors 27 angeordnet. Die zweite Fahne 50 ist rückfedernd ausgeführt.

Damit kann vermieden werden, dass der Sensor 27 und/oder die Fahne 50 Schaden nehmen kann, falls es zu einer Kollision zwischen dem Sensor 27 und der zweiten Fahne 50 kommt, sei dies wegen falschen mechanischen Einstelllungen oder wegen von der Norm abweichendem Hub des Bremsmagneten 4.

Fig. 6b, Fig. 6c zeigen Einzelheiten der zweiten Fahne 50. Ein zylinderförmiger Grundkörper 50.1 ist mit der sechsten Stange 41 verbunden und dient als Träger für Führungen 50.2, die entlang von Stiften 50.6 einer Kappe 50.3 mit Teller 50.4 gleiten. Eine Feder 50.5 stützt sich einenends am Grundkörper 50.1 und anderenends am Teller 50.4 ab und hält die Kappe 50.3 mit dem Teller 50.4 in der in der in Fig. 6a und Fig. 6c gezeigten Endlage. Bei einer Kollision des Sensors 27 mit der Fahne 50 wird die Kappe 50.3 mit dem Teller 50.4 entgegen der Federkraft der Druckfeder 50.5 bewegt.

Fig. 7, Fig. 7a zeigen das Ausgangssignal des Sensors 27 in Abhängigkeit der erfassten Distanz, bzw. des Sensorabstandes 51 bzw. der relativen Bewegung des Bremsmagnetstössels 33 gegenüber dem Bremsmagnetgehäuse 19. Der sich verändernde Abstand der Stirnseite 47 des Sensors 27 von der zweiten Fahne 50 ist in Fig. 7, Fig. 7a mit s bezeichnet. Der als Sensor 27 verwendete Näherungsschalter mit Analogausgang hat einen gegen elektromagnetische Störsignale robusten Stromausgang mit einem Stromausgangssignal zwischen 0 und 20 mA wie gezeigt in Fig. 7 oder mit einem Stromausgangssignal zwischen 0 und 5 mA wie gezeigt in Fig. 7a bei einem Sensorabstand 51 bzw. s zwischen 0 und 10 mm. Fig. 7, Fig. 7a zeigen die Charakteristik des Stromes I in Funktion des Weges s bzw. des Sensorabstandes 51. Von Interesse ist der lineare Bereich der Kurve zwischen 8 mA und 17 mA wie gezeigt in Fig. 7 oder zwischen 2 mA und 4,3 mA wie gezeigt in Fig. 7a und einem Sensorabstand 51 bzw. s zwischen 3 mm und 7,5 mm. Das analoge Stromausgangssignal wird einem analog/digital Konverter 64 eines in Fig. 8 gezeigten Monitors 60 zugeführt und von diesem ausgewertet.

Die Bremsbeläge 13,16 können bei Aufzügen mit vielen Kurzfahrten bzw. vielen Stockwerkhalten schneller als üblich abgenutzt werden. Aufzüge, die im Stockwerkbereich mit der Bremse angehalten werden (sogenannte Feinabsteller), weisen eine höhere Abnutzung der Bremsbeläge auf. Aufgrund der nachlassenden Anhaltegenauigkeit der Aufzugskabine auf dem Stockwerk kann rechtzeitig auf einen mangelhaften Zustand der Bremse geschlossen werden. Bei Antrieben mit Regelung des Anhalteniveaus ist die Anhaltegenauigkeit immer gleich, ein mangelhafter Zustand der Bremse manifestiert sich nicht mehr sichtbar.

Eine weitere Ursache für übermässige Abnutzung der Bremsbeläge 13,14 kann mindestens ein teilweises Versagen der Magnetspule 20 sein, wobei die Magnetspule 20 nicht mehr die volle Kraft zum Lösen der Bremshebel 5,6 aufbringt und der Motor 41 die Treibscheibe 30 mit geschlossenen Bremshebeln 5,6 bewegt. Zur Vermeidung dieses Zustandes mit übermässiger Abnutzung der Bremsbeläge 13,16 ist wie in Fig. 4 gezeigt ein Bremshebelschalter 40 vorgesehen, der die Stellung der Bremshebel 5,6 bei, von der Aufzugssteuerung aus gesehen, gelüfteter Bremse überwacht und feststellt, ob bei einem Fahrbefehl die Bremshebel 5,6 und somit die Bremsbeläge 13,16 von der Bremstrommel 14 gelöst worden sind. Falls der Bremshebelschalter 40 nicht vorhanden ist oder von der Aufzugssteuerung nicht unterstützt wird, kann fahren ohne gelüftete Bremse nicht vermieden werden, der Monitor 60 erkennt und eliminiert aber dennoch ein totales Versagen der Bremse.

Fig. 8 zeigt ein Blockschaltbild des Monitors 60 zur Auswertung des Sensorsignals des Sensors 27 und zur Anzeige des Zustandes der Bremseinrichtung 1. Ein Rechner 61 des Monitors 60 arbeitet nach einem in einem Programmspeicher 62 abgelegten Programm, wobei der Rechner Daten in einen Arbeitsspeicher 63 legt oder von diesem holt. Das analoge Sensorsignal des Sensors 27 wird dem analog/digital Konverter 64 des Monitors 60 zuführt. Konverter 64, Speicher 63, Speicher 62 und der Rechner 61 kommunizieren über ein Bussystem 65. Mittels eines Diagnosegerätes 66 können das Programm oder Parameter verändert werden oder Daten ausgelesen werden. Ein erstes Speisegerät 67 versorgt den Monitor 60 mit elektrischer Energie, beispielsweise mit einer Spannung von 5 V. Das erste Speisegerät 67 wird von einem monitorexternen zweiten Speisegerät 68 versorgt, beispielsweise mit Wechselspannung des Netzes 220 V oder beispielsweise mit Gleichspannung 24 V der nicht dargestellten Aufzugssteuerung.

In Abhängigkeit des Sensorsignales des Sensors 27 wird ein Relais 69 angesteuert. Bei normalem Betriebszustand der Bremseinrichtung 1 ist das Relais 69 aktiviert und ein dem Ralais 69 zugehöriger potentialfreier Kontakt 70 geschlossen. Zur Sichtbarmachung des Zustandes des geschlossenen Kontaktes kann eine erste Anzeige 71, beispielsweise eine grün leuchtende LED vorgesehen sein. Der potentialfreie Kontakt 70 ist im Sicherheitskreis 72 der nicht dargestellten Aufzugssteuerung in Serie geschaltet. Es kann auch ein zweiter potentialfreier Kontakt in Serie geschaltet sein, wobei bei Versagen des Relais 69 der Sicherheitskreis mittels des zweiten potentialfreien, relaisbetätigbaren Kontaktes geöffnet werden kann. Der Sicherheitskreis der Aufzugssteuerung ist eine Serieschaltung von Kontakten, die wichtige Funktionen des Aufzugsbetriebes überwachen, wie beispielsweise Türe geschlossen, Bremse gelüftet, Normalgeschwindigkeit der Aufzugskabine, Normallast, etc., wobei bei mindestens einem geöffneten Kontakt keine Kabinenfahrt ausgeführt wird.

In Abhängigkeit des Sensorsignales des Sensors 27 werden unterschiedliche Betriebszustände detektiert und angezeigt. Der normale Betriebszustand wird mittels einer zweiten Anzeige 73, beispielsweise mittels einer grün leuchtenden LED sichtbar gemacht. Der übermässig abgenutzten Bremsbelägen 13,16 entsprechende Betriebszustand wird mittels einer dritten Anzeige 74, beispielsweise mittels einer rot leuchtenden LED sichtbar gemacht. Ein weiterer dem Hub der Bremseinsrichtung 1 bzw. des Bremsmagnetstössels 23 entsprechende Betriebszustand wird mittels einer vierten Anzeige 75, beispielsweise mittels einer rot leuchtenden LED sichtbar gemacht. Ein weiterer der Erwärmung der Bremstrommel 14 entsprechende Betriebszustand wird mittels einer fünften Anzeige 76, beispielsweise mittels einer rot leuchtenden LED sichtbar gemacht. Ein weiterer einem durch elektronische Tests festgestellten Versagen entsprechender Betriebszustand wird mittels einer sechsten Anzeige 77, beispielsweise mittels einer rot leuchtenden LED sichtbar gemacht. Ein weiterer, der Geschlossenstellung bzw. der Offenstellung der Bremshebel 5,6 entsprechender Betriebszustand der Bremse wird mittels einer siebten Anzeige 79, beispielsweise mittels einer orange leuchtenden LED sichtbar gemacht. Der Monitor 60 kann mit allen Anzeigen oder mit einer Auswahl der genannten Anzeigen ausgerüstet sein.

Mit einem Taster 78 können im nichtflüchtigen Arbeitsspeicher 63 (EEPROM) abgelegte Messwerte des Sensors 27 beim elektronischen Hochfahren des Monitors 60 zurückgesetzt werden. Nach mechanischen Einstellarbeiten an der Bremseinrichtung 1 muss der Taster 78 gedrückt werden. Beispielsweise berechnet der Rechner 61 den Mittelwert aus mehreren Messwerten des Sensorsignals für die Geschlossenstellung der Bremshebel 5,6 bzw. der mittels Druckfedern 2,3 aktivierten Bremse und den Mittelwert aus mehreren Messwerten des Sensorsignals für die Offenstellung der Bremshebel 5,6 bzw. der mittels Bremsmagnet 4 gelüfteten Bremshebel 5,6. Nach dem Zurücksetzen der Mittelwerte werden Mittelwerte neuer Messwerte berechnet und abgelegt.

Die sechste Stange 41 mit der ersten Fahne 42 und der Bolzen 33 werden als mechanischer Referenzpunkt für den Sensor 27 verwendet, wobei als Sensorabstand 51 beispielsweise 3 mm bzw. als Luftspalt 49 2 mm vorgesehen sind. Bei 3 mm Sensorabstand 51 beginnt gemäss Fig. 7 der lineare Bereich des Sensorsignals bzw. des Ausgangsstromes I. Mit einem Luftspalt 49 von 2 mm kann in der Regel auch eine Kollision des Sensors 27 mit der zweiten Fahne 50 bei maximal abgenützten Bremsbelägen 13,16 vermieden werden.

Bei Normalbetrieb ist bei der Geschlossenstellung der Bremshebel 5,6 und bei der Offenstellung der Bremshebel 5,6 der Sensorabstand 51 im vorliegenden Ausführungsbeispiel grösser als 3 mm. Der Sensorabstand 51 ist bei der Geschlossenstellung der Bremshebel 5,6 vorgegeben. Abweichungen werden verursacht durch Abrieb der Bremsbeläge 13,16 oder durch Erwärmung der Bremstrommel 14. Der Monitor 60 kann die Abweichungen unterscheiden. Beim Abrieb der Bremsbeläge 13,14 bewegt sich der Bremsmagnetstössel 23 relativ zum Bremsmagnetgehäuse 19. Bei der Erwärmung der Bremstrommel 14 bewegt sich der Bremsmagnetstössel 23 relativ vom Bremsmagnetgehäuse 19 weg.

Der Rechner 61 des Monitors 60 berechnet aufgrund des analog/digital gewandelten Sensorsignales die Geschwindigkeit und die Richtung des Bremsmagnetstössels 23. Für die Bestimmung der Geschlossenstellung und der Offenstellung der Bremshebel 5,6 werden Signalwerte bzw. Messwerte der entsprechenden Stellung zugeordnet, falls der Bremsmagnetstössel 23 sich beispielsweise in 100 ms nicht mehr als 0,01 mm bewegt. Für die Geschlossenstellung ist beispielsweise ein Sensorabstand 51 zwischen 3 mm und 5,5 mm möglich und für die Offenstellung ist beispielsweise ein Sensorabstand 51 zwischen 5 mm und 7,5 mm möglich.

Bei jeder Kabinenfahrt ändert sich die Geschwindigkeit und die Richtung des Bremsmagnetstössels 23, wobei die Anzahl Fahrten detektiert und im Arbeitsspeicher 63 abgespeichert werden. Während den ersten beispielsweise 8 Fahrten blinkt die Anzeige 73 mit beispielsweise 10 Hz, wobei beispielsweise 8 Signalwerte des Sensors 27 bzw. Messwerte der entsprechenden Geschlossenstellung bzw. der Offenstellung zugeordnet werden und daraus die entsprechenden Mittelwerte gebildet und im Arbeitsspeicher 63 abgelegt werden. Die an der Bremseinrichtung 1 gelernte Geschlossenstellung und Offenstellung dient als Ausgangspunkt für den Betriebszustand des übermässigen Abriebs der Bremsbeläge 13,16 oder für den Betriebszustand der übermässigen Erwärmung der Bremstrommel 14. Danach blinkt die zweite Anzeige 73 beispielsweise mit 1 Hz und zeigt volle Funktionstüchtigkeit der Bremseinrichtung 1 an. Die Überwachung der Geschlossenstellung und der Offenstellung kann weitergeführt werden. Falls die Mittelwerte der gemessenen Signalwerte mehr als beispielsweise 0,5 mm abweichen, werden die abgespeicherten Mittelwerte mit den aktuellen Mittelwerten überschrieben. Alternativ kann die Geschlossenstellung und die Offenstellung einmalig wie oben erwähnt mit mehreren Messwerten gelernt werden.

Bei zunehmendem Abrieb der Bremsbeläge 13,16 wird beispielsweise 0,5 mm vor dem kritischen Punkt die dritte Anzeige 74 mit beispielsweise einer Frequenz von 10 Hz eingeschaltet und ausgeschaltet. Beim Erreichen des kritischen Punktes (Sensorabstand 51 = 3 mm) wird das Relais 69 zeitverzögert ausgeschaltet und der potentialfreie Kontakt 70 geöffnet. Die Zeitverzögerung ist so bemessen, dass die Aufzugskabine die laufende Fahrt zu Ende führen kann und die transportierten Personen die Aufzugskabine verlassen können. Der Betriebszustand des übermässigen Abriebs der Bremsbeläge 13,16 wird dann mit der dauernd eingeschalteten dritten Anzeige 74 signalisiert.

Falls der Hub bzw. der Abstand zwischen der Geschlossenstellung und der Offenstellung kleiner ist als beispielsweise 2 mm während beispielsweise 3 Sekunden, geht der Monitor 60 von einem Fehler aus, beispielsweise eine falsche mechanische Einstellung oder eine mechanische Blockierung. Ein weiterer über den Hub feststellbarer Fehler ist die Anzahl der Offenstellungen in Relation zur maximalen Fahrzeit der Aufzugskabine. Beim Auftreten eines Hubfehlers wird das Relais 69 zeitverzögert ausgeschaltet und der potentialfreie Kontakt 70 geöffnet. Die Zeitverzögerung ist so bemessen, dass die Aufzugskabine die laufende Fahrt zu Ende führen kann und die transportierten Personen die Aufzugskabine verlassen können. Die vierte Anzeige 75 wird vorerst beispielsweise mit einer Frequenz von 10 Hz eingeschaltet und ausgeschaltet und dann dauernd eingeschaltet.

Falls wegen Versagen des Bremsmagneten oder wegen Softwarefehlern oder wegen Hardwarefehlern in den elektronischen Schaltkreisen die Bremseinrichtung 1 nicht gelüftet wird bzw. falls die Bremsbeläge 13,16 nicht von der Bremstrommel 14 gelöst werden, kann vom Monitor 60 auch kein Hubfehler festgestellt werden. Bei einer Kabinenfahrt mit geschlossener Bremse erwärmt sich die Bremstrommel 14 und die Bremsbeläge 13,16. Bremstrommel 14 und Bremsbeläge 13,16 dehnen sich dabei aus und erzeugen eine Bewegung des Bremsmagnetstössels 23 relativ zum Bremsmagnetgehäuse 19 entgegengesetzt zur durch Abrieb verursachten Bewegung. Die Abweichung wird in Abhängigkeit der Distanz der Geschlossenstellung vom kritischen Punkt bewertet. Je mehr der Abrieb der Bremsbeläge 13,16 fortgeschritten ist bzw. je dünner die Bremsbeläge 13,14 sind, umso kleiner ist die zu einer Abschaltung führende Abweichung. Die Abweichung kann beispielsweise im Bereich von 0,7 mm bis 1,5 mm liegen. Beim Auftreten einer unzulässigen Abweichung wird das Relais 69 zeitverzögert ausgeschaltet und der potentialfreie Kontakt 70 geöffnet. Die Zeitverzögerung ist so bemessen, dass die Aufzugskabine die laufende Fahrt zu Ende führen kann und die transportierten Personen die Aufzugskabine verlassen können. Die fünfte Anzeige 76 wird vorerst beispielsweise mit einer Frequenz von 10 Hz eingeschaltet und ausgeschaltet und dann dauernd eingeschaltet.

Der Monitor 60 selbst kann auch ein Einschalten des Relais 69 verhindern oder ein Abschalten des Relais 69 und ein Öffnen des potentialfreien Kontaktes 70 bewirken. Gründe dafür sind negative Plausibilitätstest beim elektronischen Hochfahren oder im Betrieb des Monitors 60. Weitere Abschaltgründe sind ein fehlender Sensor 27 oder eine über lange Zeit, beispielsweise 3 Monate, nicht gelüftete Bremseinrichtung 1. Diese Art von Fehler wird mittels der sechsten Anzeige 77 sichtbar gemacht.

## Patentansprüche

1. Bremseinrichtung (1) für einen Aufzugsantrieb, mit Druckfedern (2,3), die Bremshebel (5,6) mit einer Federkraft beaufschlagen, wobei Bremsbeläge (13,16) an einer Bremstrommel (14) eine Bremskraft erzeugen und ein Bremsmagnet (4) entgegen der Federkraft die Bremshebel (5,6) lüftet und wobei ein Bremsmagnetgehäuse (19) an einem ersten Gelenk (22) mit dem einen Bremshebel (5) verbunden ist und
ein Anker (21) mit einem Bremsmagnetstössel (23) verbunden ist, welcher Bremsmagnetstössel (23) über ein zweites Gelenk (24) mit einer Stange (25) verbunden ist, die ihrerseits mittels Justierelementen (26) mit dem anderen Bremshebel (6) verbunden ist,
**dadurch gekennzeichnet,**
**dass** ein Sensor (27) vorgesehen ist, der eine
Relativbewegung des Ankers (21) gegenüber dem Bremsmagnetgehäuse (19) erfasst.

2. Bremseinrichtung nach Anspruch 1,
**dadurch gekennzeichnet,**
**dass** der Sensor (27) an dem Bremsmagnetstössel (23) des Ankers (21) angeordnet ist und die Relativbewegung des Bremsmagnetstössels (23) gegenüber dem Bremsmagnetgehäuse (19) erfasst, wobei der Sensor (27) ein von der Bewegung abhängiges Signal erzeugt.

3. Bremseinrichtung nach Anspruch 1,
**dadurch gekennzeichnet,**
**dass** der Sensor (27) am Anker (21) des Bremsmagneten (4) angeordnet ist und ein von der Bewegung abhängiges Signal erzeugt.

4. Bremseinrichtung nach Anspruch 1,
**dadurch gekennzeichnet,**
**dass** der Sensor (27) am Bremsmagnetgehäuse (19) angeordnet ist und ein von der Bewegung abhängiges Signal erzeugt.

5. Bremseinrichtung nach Anspruch 2,
**dadurch gekennzeichnet,**
**dass** der Sensor (27) am bestehenden Bolzen (33) des Bremsmagnetstössels (23) angeordnet ist und eine zweite Fahne (50) am bestehenden mechanischen Indikator (41,42) angeordnet ist, der die Lage des Bolzens (33) gegenüber dem Bremsmagnetgehäuse (19) anzeigt.

6. Bremseinrichtung nach Anspruch 5,
**dadurch gekennzeichnet,**
**dass** die zweite Fahne (50) rückfedernd ausgebildet ist.

7. Bremseinrichtung nach einem der vorhergehenden Ansprüche,
**dadurch gekennzeichnet,**
**dass** als Sensor (27) ein induktiver Näherungsschalter mit Analogausgang vorgesehen ist.

8. Bremseinrichtung nach einem der vorhergehenden Ansprüche,
**dadurch gekennzeichnet,**
**dass** das Sensorsignal einem Monitor (60) zugeführt wird, der in Abhängigkeit des Sensorsignales des Sensors 27 unterschiedliche Betriebszustände der Bremseinrichtung detektiert und angeteigt.

9. Aufzug mit einem Aufzugsantrieb mit einer Bremseinrichtung nach den Ansprüchen 1 bis 8.

10. Verfahren zum Nachrüsten eines Aufzugsantriebes mit einer Bremseinrichtung (1) nach den Ansprüchen 1 bis 8,
**dadurch gekennzeichnet,**
**dass** der Sensor (27) am Bremsmagnetstössel (23) des Ankers (21) angebaut wird, wobei der Sensor (27) die Relativbewegung des Bremsmagnetstössels (23) gegenüber dem Bremsmagnetgehäuse (19) erfasst und der Sensor (27) ein von der Bewegung abhängiges Signal erzeugt.

11. Verfahren zur Detektion und Anzeige unterschiedlicher Betriebszustände eines Aufzugsantriebes mit einer Bremseinrichtung (1) nach den Ansprüchen 1 bis 8,
**dadurch gekennzeichnet,**
**dass** die Detektion und Anzeige in Abhängigkeit eines Sensorsignales eines eine Relativbewegung eines Bremsmagneten (4) erfassenden Sensors (27) erfolgt, wobei der normale Betriebszustand mittels einer zweiten Anzeige (73) sichtbar gemacht wird und
der übermässig abgenutzten Bremsbelägen (13,16) entsprechende Betriebszustand mittels einer dritten Anzeige (74) sichtbar gemacht wird und
ein dem Hub des Bremsmagneten (4) entsprechende Betriebszustand mittels einer vierten Anzeige (75) sichtbar gemacht wird und
ein der Erwärmung einer Bremstrommel (14) entsprechende Betriebszustand mittels einer fünften Anzeige (76) sichtbar gemacht wird und
ein einem durch elektronische Tests eines Monitors (60) festgestellten Versagen entsprechende Betriebszustand mittels einer sechsten Anzeige (77) sichtbar gemacht wird.

12. Verfahren nach Anspruch 11,
**dadurch gekennzeichnet,**
**dass** mehrere Signalwerte des Sensors (27) der entsprechenden Geschlossenstellung bzw. der Offenstellung der Bremseinrichtung (1) zugeordnet werden und daraus Mittelwerte gebildet werden und die an der Bremseinrichtung (1) gelernte Geschlossenstellung und Offenstellung als Ausgangspunkt für den Betriebszustand des übermässigen Abriebs der Bremsbeläge (13,16) oder für den Betriebszustand der übermässigen Erwärmung der Bremstrommel (14) dient.

13. Verfahren nach Anspruch 11,
**dadurch gekennzeichnet,**
**dass** der Hub aus dem Abstand zwischen der Geschlossenstellung und der Offenstellung der Bremseinrichtung (1) bestimmt wird und beim Unterschreiten eines vorherbestimmten Wertes als fehlerhaft erkannt wird, und über den Hub die Anzahl der Offenstellungen in Relation zur maximalen Fahrzeit der Aufzugskabine als fehlerhaft erkannt wird.

14. Verfahren nach Anspruch 12,
**dadurch gekennzeichnet,**
**dass** die bei der übermässigen Erwärmung der Bremstrommel (14) und der Bremsbeläge (13,16) durch Dehnung verursachte Bewegung eines Bremsmagnetstössels (23) eines Ankers (21) relativ zu einem festen Bremsmagnetteil (19) und entgegengesetzt zur durch Abrieb verursachten Bewegung in Abhängigkeit der Distanz der Geschlossenstellung vom kritischen Punkt bewertet wird und eine umso kleinere Abweichung zu einer Abschaltung führt je weiter fortgeschritten der Abrieb der Bremsbeläge (13,14) ist.

15. Verfahren nach einem der Ansprüche 11 bis 14,
**dadurch gekennzeichnet,**
**dass** mindestens der den übermässig abgenutzten Bremsbelägen (13,16) entsprechende Betriebszustand oder der dem Hub des Bremsmagneten (4) entsprechende Betriebszustand oder der der Erwärmung einer Bremstrommel (14) entsprechende Betriebszustand oder der durch elektronische Tests eines Monitors (60) festgestellten Versagen entsprechende Betriebszustand zu einer Abschaltung des Aufzugsantriebes (41,46) bzw. des Aufzuges führt.

16. Verfahren nach Anspruch 15,
**dadurch gekennzeichnet,**
**dass** die Abschaltung zeitverzögert erfolgt, wobei die Zeitverzögerung so bemessen ist, dass die Aufzugskabine die laufende Fahrt zu Ende führen kann und die transportierten Personen die Aufzugskabine verlassen können.

## Claims

1. Brake device (1) for an elevator drive (1), comprising compression springs (2, 3), which act on brake levers (5, 6) by a spring force, wherein brake linings (13, 16) generate a braking force at a brake drum (14) and a brake magnet (4) lifts the brake levers (5, 6) against the spring force and wherein a brake-magnet housing (19) is connected with a brake lever (5) at a first joint (22) and an armature (21) is connected with a brake-magnet tappet (23), which brake-magnet tappet (23) is connected by way of a second joint (24) with a bar (25) which is in turn connected with the other brake lever (6) by means of adjusting elements (26),
**characterized in that**
a sensor (27) which detects movements of the armature (21) relative to the brake-magnet housing (19) is provided.

2. Brake device according to claim 1,
**characterized in that**
the sensor (27) is arranged on the brake-magnet tappet (23) of the armature (21) and detects the movement of the brake-magnet tappet (23) relative to the brake-magnet housing (19), wherein the sensor (27) generates a signal dependent on the movement.

3. Brake device according to claim 1,
**characterized in that**
the sensor (27) is arranged on the armature (21) of the brake magnet (4) and generates a signal dependent on the movement.

4. Brake device according to claim 1,
**characterized in that**
the sensor (27) is arranged on the brake-magnet housing (19) and generates a signal dependent on the movement.

5. Brake device according to claim 2,
**characterized in that**
the sensor (27) is arranged on the existing bolt (33) of the brake-magnet tappet (23) and arranged on the existing mechanical indicator (41, 42) is a second vane (50) which indicates the position of the bolt (33) relative to the brake-magnet housing (19).

6. Brake device according to claim 5,
**characterized in that** the second vane (50) is of resilient construction.

7. Brake device according to any one of the preceding claims,
**characterized in that**
provided as sensor (27) is an inductive proximity switch with analog output.

8. Brake device according to any one of the preceding claims,
**characterized in that**
the sensor signal is fed to a monitor (60) which in dependence on the sensor signal of the sensor (27) detects and indicates different operating states of the brake device.

9. Elevator with an elevator drive with a brake device according to claims 1 to 8.

10. Method for retrofitting an elevator drive (41, 46) with a brake device (1) according to any one of claims 1 to 8,
**characterized in that**
the sensor (27) is mounted on the brake-magnet tappet (23) of the armature (21), wherein the sensor (27) detects movement of the brake-magnet tappet (23) relative to a brake-magnet housing (19) and the sensor (27) generates a signal dependent on the movement.

11. Method for the detection and indication of different operating states of an elevator drive (41, 46) with a brake device (1) according to any one of claims 1 to 8,
**characterised in that** the detection and indication takes place in dependence on a sensor signal of a sensor (27) detecting a relative movement of a brake magnet (4), wherein the normal operating state is made visible by means of a second indicator (73), and
the operating state corresponding to excessively worn brake linings (13, 16) is made visible by means of a third indicator (74), and
an operating state corresponding to the stroke of the brake magnet (4) is made visible by means of a fourth indicator (75), and
an operating state corresponding to the heating of a brake drum (14) is made visible by means of a fifth indicator (76), and
an operating state corresponding to a failure detected by electronic tests of a monitor (60) is made visible by means of a sixth indicator (77).

12. Method according to claim 11,
**characterized in that**
several signal values of the sensor (27) are assigned to the corresponding closed position or open position of the brake device (1) and mean values can be formed therefrom and the closed position and open position learned at the brake device (1) serve as starting point for the operating state of excessive wear of the brake linings (13, 16) or for the operating state of excessive heating of the brake drum (14).

13. Method according to claim 11,
**characterized in that**
the stroke is determined from the distance between the closed position and the open position of the brake device (1) and on falling below a predetermined value is recognized as faulty, and from the stroke the number of open positions in relation to the maximum travel time of the elevator car is recognized as faulty.

14. Method according to claim 12,
**characterized in that**
the movement of a brake-magnet tappet (23) of an armature (21) relative to a fixed brake-magnet part (19) and contrary to the movement caused by wear that is caused by expansion that takes place on excessive heating of the brake drum (14) and brake linings (13, 16) is evaluated depending on the distance of the closed position from the critical point, and a correspondingly smaller deviation results in switching-off the more advanced the wear of the brake linings (13, 14) is.

15. Method according to one of claims 11 to 14,
**characterized in that**
at least the operating state that corresponds to excessively worn brake linings (13, 16) or the operating state that corresponds to the stroke of the brake magnet (4) or the operating state that corresponds to the heating of a brake drum (14) or the operating state that corresponds to failure detected by electronic tests of a monitor (60) results in switching-off of the elevator drive (41, 46) or of the elevator.

16. Method according to claim 15,
**characterized in that**
switching-off takes place delayed in time, wherein the time delay is of such magnitude that the elevator car can complete the current trip and the transported persons can leave the elevator car.

## Revendications

1. Dispositif de frein (1) pour un entraînement d'ascenseur, avec des ressorts de compression (2, 3) qui contraignent des leviers de frein (5, 6) avec une force élastique, étant précisé que les garnitures de frein (13, 16) produisent sur un tambour de frein (14) une force de freinage et qu'un aimant de frein (4) débloque les leviers de frein (5, 6) à l'encontre de la force élastique, et étant précisé qu'un carter d'aimant de frein (19) est relié au niveau d'une première articulation (22) à un levier de frein (5) tandis qu'un induit (21) est relié à un poussoir d'aimant de frein (23), lequel poussoir d'aimant de frein (23) est relié par l'intermédiaire d'une seconde articulation (24) à une barre (25) qui est elle-même reliée à l'aide d'éléments ajustement (26) à l'autre levier de frein (6),
**caractérisé en ce qu'**il est prévu un capteur (27) qui détecte un mouvement relatif de l'induit (21) par rapport au carter d'aimant de frein (19).

2. Dispositif de frein selon la revendication 1, **caractérisé en ce que** le capteur (27) est disposé sur le poussoir d'aimant de frein (23) de l'induit (21) et détecte le mouvement relatif dudit poussoir (23) par rapport au carter d'aimant de frein (19), étant précisé que le capteur (27) produit un signal dépendant du mouvement.

3. Dispositif de frein selon la revendication 1, **caractérisé en ce que** le capteur (27) est disposé sur l'induit (21) de l'aimant de frein (4) et produit un signal dépendant du mouvement.

4. Dispositif de frein selon la revendication 1, **caractérisé en ce que** le capteur (27) est disposé sur le carter d'aimant de frein (19) et produit un signal dépendant du mouvement.

5. Dispositif de frein selon la revendication 2, **caractérisé en ce que** le capteur (27) est disposé sur la cheville existante (33) du poussoir d'aimant de frein (23), et une seconde patte (50) est disposée sur l'indicateur mécanique existant (41, 42) qui indique la position de la cheville (33) par rapport au carter d'aimant de frein (19).

6. Dispositif de frein selon la revendication 5, **caractérisé en ce que** la seconde patte (50) est conçue avec un rappel élastique.

7. Dispositif de frein selon l'une des revendications précédentes, **caractérisé en ce qu'**il est prévu comme capteur (27) un commutateur de proximité inductif avec une sortie analogique.

8. Dispositif de frein selon l'une des revendications précédentes, **caractérisé en ce que** le signal de capteur est transmis à un dispositif de surveillance (60) qui, en fonction du signal du capteur (27), détecte et affiche différents états de fonctionnement du dispositif de frein.

9. Ascenseur avec un entraînement d'ascenseur pourvu d'un dispositif de frein selon les revendications 1 à 8.

10. Procédé pour moderniser un entraînement d'ascenseur pourvu d'un dispositif de frein (1) selon les revendications 1 à 8,
**caractérisé en ce qu'**on monte le capteur (27) sur le poussoir d'aimant de frein (23) de l'induit (21), étant précisé que ledit capteur (27) détecte le mouvement relatif du poussoir d'aimant de frein (23) par rapport au carter d'aimant de frein (19) et produit un signal dépendant du mouvement.

11. Procédé pour la détection et l'affichage de différents états de fonctionnement d'un entraînement d'ascenseur pourvu d'un dispositif de frein (1) selon les revendications 1 à 8,
**caractérisé en ce que**
la détection et l'affichage se font en fonction d'un signal d'un capteur (27) qui détecte un mouvement relatif d'un aimant de frein (4), étant précisé que l'état de fonctionnement normal est rendu visible à l'aide d'un deuxième affichage (73), et
l'état de fonctionnement correspondant à des garnitures de frein (13, 16) excessivement usées est rendu visible à l'aide d'un troisième affichage (74), et
un état de fonctionnement correspondant à la course de l'aimant de frein (4) est rendu visible à l'aide d'un quatrième affchage (75), et
un état de fonctionnement correspondant à l'échauffement d'un tambour de frein (14) est rendu visible à l'aide d'un cinquième affichage (76), et
un état de fonctionnement correspondant à une défaillance constatée grâce à des tests électroniques d'un dispositif de surveillance (60) est rendu visible à l'aide d'un sixième affichage (77).

12. Procédé selon la revendication 11, **caractérisé en ce que** plusieurs valeurs de signal du capteur (27) sont affectées à la position fermée ou ouverte correspondante du dispositif de frein (1), et à partir de là, des valeurs moyennes sont formées et les positions fermée et ouverte apprises au niveau du dispositif de frein (1) servent de point de départ pour l'état de fonctionnement de l'abrasion excessive des garnitures de frein (13, 16) ou pour l'état de fonctionnement de l'échauffement excessif du tambour de frein (14).

13. Procédé selon la revendication 11, **caractérisé en ce que** la course est définie à partir de la distance entre la position fermée et la position ouverte du dispositif de frein (1) et est reconnue incorrecte si elle devient inférieure à une valeur définie préalablement, et par l'intermédiaire de la course, le nombre de positions ouvertes par rapport au temps de circulation maximal de la cabine d'ascenseur est reconnu incorrect.

14. Procédé selon la revendication 12, **caractérisé en ce que** le mouvement d'un poussoir d'aimant de frein (23) d'un induit (21), provoqué par la dilatation lors de l'échauffement excessif du tambour de frein (14) et des garnitures de frein (13, 16), par rapport à une partie d'aimant de frein fixe (19) et à l'opposé du mouvement provoqué par l'abrasion est évalué en fonction de la distance entre la position fermée et le point critique, et plus l'abrasion des garnitures de frein (13, 14) est avancée, plus un petit écart entraîne un arrêt.

15. Procédé selon l'une des revendications 11 à 14, **caractérisé en ce que** l'état de fonctionnement, au moins, correspondant aux garnitures de frein (13, 16) excessivement usées ou l'état de fonctionnement correspondant à la course de l'aimant de frein (4) ou l'état de fonctionnement correspondant à l'échauffement d'un tambour de frein (14) ou l'état de fonctionnement correspondant à une défaillance constatée grâce à des tests électroniques d'un dispositif de surveillance (60) entraînent un arrêt de l'entraînement d'ascenseur (41, 46) ou de l'ascenseur.

16. Procédé selon la revendication 15, **caractérisé en ce que** l'arrêt se fait de manière retardée, étant précisé que le retard est calculé pour que la cabine d'ascenseur puisse terminer le trajet en cours et que les personnes transportées puissent quitter la cabine.
